# FASCICULE DE BREVET EUROPEEN

(11) **EP 4 187 330 B1**
(45) Date de publication et mention de la délivrance du brevet: **24.12.2025**
(21) Numéro de dépôt: 21210354.3
(22) Date de dépôt: 25.11.2021
(51) Int. Cl.: G04B 37/08, F16J 15/06, F16J 15/10

(54) **ASSEMBLAGE POUR LA RÉALISATION DE JOINTS D ÉTANCHÉITÉ ET PROCÉDÉ DE FABRICATION DE JOINTS D ÉTANCHÉITÉ À PARTIR DE CET ASSEMBLAGE**
ANORDNUNG ZUR HERSTELLUNG VON DICHTUNGSFUGEN UND VERFAHREN ZUR HERSTELLUNG VON DICHTUNGSFUGEN MITHILFE DIESER ANORDNUNG
ASSEMBLY FOR PRODUCING SEALS AND METHOD FOR MANUFACTURING SEALS USING SAID ASSEMBLY

(43) Date de publication de la demande: 31.05.2023
(60) Demande divisionnaire: 25189682.5
(73) Titulaire: The Swatch Group Research and Development Ltd, 2074 Marin (CH)
(72) Inventeur: AGUSTONI, Enzo, 1588 Cudrefin (CH); GIRARDIN, Alexandre, 2000 Neuchâtel (CH); ERDEMLI, François, 2013 Colombier (CH)
(74) Mandataire: ICB SA

(56) Documents cités:
- WO-A2-2008/039596
- GB-A- 2 391 721
- JP-A- H09 100 917

## Description

### Domaine technique de l'invention

L'invention relève du domaine de la micromécanique, et trouve notamment une application avantageuse dans le domaine de l'horlogerie.

Plus particulièrement, l'invention concerne un procédé de fabrication de joints d'étanchéité à partir de cet assemblage.

### Arrière-plan technologique

Les joints d'étanchéité destinés à être agencés dans des boites de montres sont réalisés à partir de la découpe, généralement par usinage avec outils coupants, par exemple par fraisage ou par tournage, d'un assemblage de tubes aboutés de façon colinéaire les uns aux autres.

Les tubes présentent une forme cylindrique et comportent une section transversale définissant la forme du joint obtenu après usinage.

Pour être fixés sans degré de liberté les uns par rapports aux autres, les tubes peuvent être soudés à leurs extrémités en vis-à-vis. Par exemple, à cet effet, deux tubes sont agencés en appui par une de leurs extrémités contre une plaque chauffante jusqu'à atteindre leur température de fusion, et lesdites extrémités sont par la suite maintenues l'une contre l'autre jusqu'à refroidissement.

Il est également envisageable, alternativement au soudage, de coller deux tubes attenants au niveau de leur interface en répartissant une couche de colle sur leurs extrémités respectives et en les maintenant en position sur un gabarit jusqu'au séchage de la colle.

Toutefois, de telles solutions, en plus de présenter l'inconvénient de poser des difficultés de respect des tolérances de colinéarité, génèrent un cordon, respectivement de soudure ou de colle, formant une bavure sur les surfaces interne et externe de l'assemblage.

Alternativement, les tubes peuvent être liés les uns aux autres par l'intermédiaire de pièces dédiées, telles que des manchons de connexions, par exemple à visser, bien connus de l'homme du métier.

Une telle solution est généralement longue et fastidieuse à mettre en œuvre, en plus de générer un surcoût par l'ajout de pièces additionnelles dans l'assemblage.

### Résumé de l'invention

L'invention résout les inconvénients précités en proposant une solution permettant de garantir la colinéarité des tubes aboutés les uns par rapport aux autres, de maitriser l'aspect de la surface externe de l'assemblage et de ne pas nécessiter de gabarit d'assemblage ou de pièce additionnelle autre que les tubes pour réaliser l'assemblage.

À cet effet, la présente invention concerne un procédé de fabrication de joints d'étanchéité consistant à réaliser, par des opérations d'usinage, une pluralité de découpes dans un assemblage réalisé par au moins deux tubes identiques aboutés, chaque tube s'étendant selon un axe longitudinal entre deux extrémités, l'extrémité d'un tube, dite « première extrémité », présentant une forme complémentaire de la forme de l'extrémité de l'autre tube, dite « seconde extrémité », de sorte que lesdites première et seconde extrémités coopèrent par complémentarité de forme.

Les caractéristiques de l'assemblage selon l'invention permettent avantageusement de garantir la colinéarité des tubes les uns par rapport aux autres, et ainsi d'éliminer tout risque de balourd qui pourrait être préjudiciable lors de l'usinage dudit assemblage.

Par ailleurs, ces caractéristiques permettent d'éviter toute bavure sur la surface externe de l'assemblage.

Un autre avantage de l'invention réside dans le fait qu'elle permet de maitriser les dimensions des tubes, et ainsi de l'assemblage.

Dans des modes particuliers de mise en œuvre, l'invention peut comporter en outre l'une ou plusieurs des caractéristiques suivantes, prises isolément ou selon toutes les combinaisons techniquement possibles.

Dans des modes particuliers de mise en œuvre, le procédé de fabrication comporte, avant la réalisation des opérations d'usinage, une étape préliminaire de réalisation de l'assemblage dans laquelle les tubes sont obtenus par moulage puis aboutés les uns aux autres, de sorte à obtenir ledit assemblage.

Dans des modes particuliers de mise en œuvre, le procédé de fabrication comporte, avant la réalisation des opérations d'usinage, une étape préliminaire dans laquelle, pour chaque tube, un corps cylindrique est réalisé par extrusion et une première extrémité est réalisée par moulage, puis ladite première extrémité est fixée audit corps cylindrique, et enfin les tubes ainsi formés sont aboutés les uns aux autres de sorte à obtenir ledit assemblage.

Dans des modes particuliers de mise en œuvre, lors de l'étape préliminaire, la première extrémité est surmoulée au corps cylindrique.

Dans des modes particuliers de mise en œuvre, lorsque les tubes sont aboutés, ils sont vissés les uns avec les autres, au niveau de leurs première et seconde extrémités respectives en vis-à-vis.

Dans des modes particuliers de mise en œuvre, lorsque les tubes sont aboutés, ils sont collés ou chassés les uns avec les autres, au niveau de leurs première et seconde extrémités respectives en vis-à-vis.

### Brève description des figures

D'autres caractéristiques et avantages de l'invention apparaîtront à la lecture de la description détaillée suivante donnée à titre d'exemple nullement limitatif, en référence aux dessins annexés dans lesquels :
- la figure 1 représente une vue en coupe d'un assemblage destiné à être usiné pour réaliser des joints d'étanchéité, ledit assemblage comprenant quatre tubes aboutés ;
- la figure 2 représente une vue en coupe d'un tube de l'assemblage de la figure 1 ;
- la figure 3 représente une vue en coupe d'un tube selon une autre variante de réalisation de l'invention.

On note que les figures ne sont pas à l'échelle.

### Description détaillée de l'invention

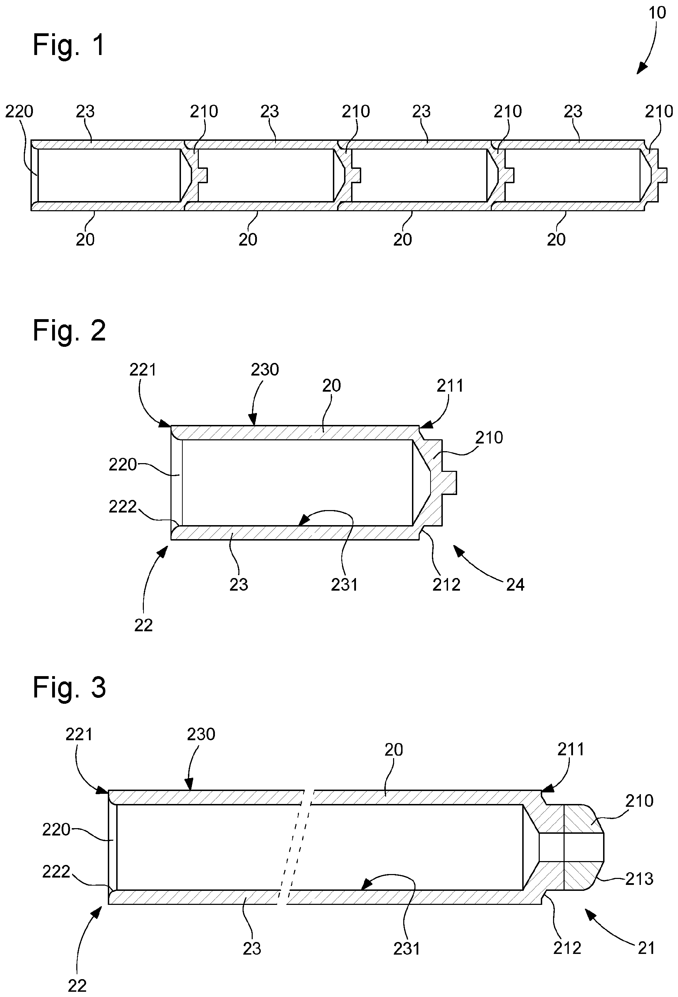

La figure 1 montre un assemblage 10, destiné à être usiné pour réaliser des joints d'étanchéité selon la présente invention.

L'assemblage 10 comporte une pluralité de tubes 20, identiques, aboutés de sorte à former une barre s'étendant selon un axe longitudinal confondu avec celui de chaque tube 20.

Comme l'illustrent les figures 2 et 3 dans différentes variantes de réalisation de tubes 20, chaque tube 20 s'étend entre une première et une seconde extrémité 21 et 22 présentant des formes complémentaires, de sorte que la première extrémité 21 d'un tube 20 coopère par complémentarité de forme avec la seconde extrémité 22 d'un autre tube 20.

Ainsi, l'assemblage 10 est constitué d'une pluralité de tubes 20 successivement aboutés les uns aux autres par chacune de leurs première et seconde extrémités 21 et 22, à l'exception des tubes 20 agencés aux extrémités de l'assemblage 10.

Les tubes 20 sont fixés les uns aux autres sans degré de liberté, par exemple par chassage et/ou par collage à leur interface.

La première extrémité 21 de chaque tube 20 comporte avantageusement un tenon 210 s'étendant selon l'axe longitudinal des tubes 20, depuis une surface radiale 211 avec laquelle il forme un épaulement annulaire.

La seconde extrémité 22 est formée par une ouverture 220 axiale débouchant sur une surface d'extrémité 221 et dans laquelle le tenon 210 d'un tube 20 adjacent est engagé, comme le montre la figure 1, de sorte que la surface radiale 211 depuis laquelle s'étend ledit tenon 210 soit agencé en appui contre ladite surface d'extrémité 221, ce contact définissant le positionnement axial des deux tubes 20 adjacents l'un par rapport à l'autre.

Le positionnement radial des deux tubes 20 adjacents est défini par l'engagement du tenon 210 dans l'ouverture 220.

Plus précisément, dans l'exemple de réalisation de l'invention représenté sur les figures 1 à 3, entre ses première et seconde extrémités 21 et 22, chaque tube 20 comporte un corps cylindrique 23 creux défini entre une surface externe 230 et une surface interne 231, l'ouverture 220 étant matérialisée par la surface interne 231 de la seconde extrémité 22.

La surface interne 231 de la seconde extrémité 22 peut avantageusement recevoir l'éventuelle couche de colle mentionnée plus haut dans le texte, pour augmenter la fixation entre deux tubes 20, de sorte que la colle ne déborde pas sur la surface externe 230.

Alternativement, la couche de colle peut être appliquée sur la surface externe du tenon 210.

Dans l'exemple préféré de réalisation de l'invention représenté sur les figures, chaque tube 20 est monobloc dans le sens où il est formé d'un seul tenant.

Le corps cylindrique 23 peut présenter une forme de révolution ou non.

Sur les figures 1 et 2, les tubes 20 sont borgnes dans la mesure où l'ouverture 220 débouche uniquement sur leur seconde extrémité 22, alors que dans la variante de réalisation représentée sur la figue 3, les tubes 20 présentent une ouverture 220 traversante débouchant également sur la première extrémité 21.

Avantageusement, la seconde extrémité 22 peut comporter un chanfrein ou un congé 222 défini entre la surface d'extrémité 221 et la surface interne 231 afin de faciliter l'engagement du tenon 210 d'un tube 20 dans l'ouverture 220 d'un autre tube 20 et ainsi, de faciliter la réalisation de l'assemblage 10.

Afin de parfaire la coopération de forme entre la première et la seconde extrémité 21 et 22, la première extrémité 21 peut comporter un chanfrein ou congé 212 défini entre la surface radiale 211 et le tenon 210. Le congé 212 de la première extrémité 21 de chaque tube 20 est alors en vis-à-vis du chanfrein ou congé 222 de la seconde extrémité 22 du tube 20 adjacent avec laquelle ladite première extrémité 21 coopère, sauf pour un tube 20 constituant une extrémité de l'assemblage 10 ; par exemple le tube 20 d'extrémité à droite de l'assemblage 10 visible sur la figure 1.

Dans ce même objectif, le tenon 210 peut comprendre un chanfrein ou un congé 213 au niveau de son extrémité libre, comme illustré sur la figure 3.

Avantageusement, les formes complémentaires des premières et secondes extrémités 21 et 22 ne sont pas des formes de révolution, afin d'interdire toute éventuelle rotation entre les tubes 20. Ainsi, l'assemblage 10 est davantage résistant aux efforts en torsion notamment subis lors de l'usinage de l'assemblage 10. Cette caractéristique permet de fortement réduire les risques de rupture de l'assemblage 10, c'est-à-dire la désolidarisation de deux tubes 20 adjacents, lors de l'usinage des joints.

Plus particulièrement, les sections transversales des tenons 210 et des ouvertures 220 peuvent être de forme polygonale, par exemple carrée, triangulaire, etc., ou de forme courbe, par exemple ovale, polylobée, etc.

Alternativement, la première et la seconde extrémités 21 et 22 respectives de deux tubes 20 adjacents peuvent coopérer les unes avec les autres par le biais d'une liaison hélicoïdale. Plus particulièrement, les tenons 210 peuvent être filetés de sorte à être engagés par vissage dans les ouvertures 220 qui sont alors taraudées.

Dans un autre exemple de réalisation de l'invention non représenté sur les figures, pour chaque tube 20, le corps cylindrique 23 et le tenon 210 peuvent être formés de façon indépendante l'une de l'autre, de sorte que le tube 20 résulte de la solidarisation d'un corps cylindrique 23 et d'un tenon 210.

Dans ce cas, le corps cylindrique 23 et le tenon 210 peuvent être de matières différentes et peuvent être chassés et/ou collés.

Seules les portions des tubes 20 de l'assemblage 10 comprises en dehors des interfaces entre les premières et les secondes extrémités 21 et 22 sont exploitables, dans la mesure où elles sont destinées à former, après des opérations successives de découpe transversales de l'assemblage 10 par usinage, les joints d'étanchéité. Autrement dit, les portions de l'assemblage 10 constituées par les interfaces entre les premières et secondes extrémités 21 et 22 des tubes 20 ne sont pas exploitées et constituent des rebuts.

A titre d'exemple, chaque tube 20 peut présenter une longueur comprise entre 20 et 80 centimètres, préférentiellement 30 centimètres.

Ces valeurs de longueur des tubes 20 sont avantageuses car elles constituent un bon compromis entre une longueur des tubes 20 trop importante difficile à réaliser par opération de moulage, et une longueur trop faible minimisant les portions exploitables de chaque tube 20.

Comme mentionné ci-avant, le procédé de fabrication de joints d'étanchéité consiste à réaliser une pluralité de découpes transversales dans un assemblage 10 par des opérations d'usinage avec outils coupants, notamment de tournage, et en particulier de décolletage. Les découpes peuvent être suivies d'opérations d'usinage complémentaires, telles que des opérations de fraisage, afin de rectifier la section des joints obtenus.

La longueur de l'assemblage 10 peut être de plusieurs mètres et est en pratique seulement limitée par les contraintes des machines d'usinage.

Le procédé de fabrication comporte, avant la réalisation des opérations d'usinage, une étape préliminaire de réalisation de l'assemblage 10, dans laquelle les tubes 20 sont obtenus par moulage, puis aboutés les uns aux autres.

Alternativement, lors de l'étape préliminaire, pour chaque tube 20, le corps cylindrique 23 est réalisé par extrusion et la première extrémité 21 est réalisée par moulage, puis chaque première extrémité 21 est fixée à un corps cylindrique 23, et enfin, les tubes 20 ainsi formés sont aboutés les uns aux autres.

Plus particulièrement, lors de l'étape préliminaire, la première extrémité 21 peut être surmoulée au corps cylindrique 23.

La présente invention est particulièrement adaptée pour obtenir des joints d'étanchéité destinés à être agencés contre une carrure d'une boite de montre, par exemple interposés entre un fond et la carrure, une glace et la carrure ou une lunette et la carrure.

A titre d'exemple, le matériau des tubes 20 est un polymère, notamment un polyuréthane, préférentiellement celui du type connu par l'homme du métier sous la dénomination commerciale « Asutane ».

De manière plus générale, il est à noter que les modes de mise en œuvre et de réalisation considérés ci-dessus ont été décrits à titre d'exemples non limitatifs, et que d'autres variantes sont par conséquent envisageables.

## Revendications

1. Procédé de fabrication de joints d'étanchéité consistant à réaliser, par des opérations d'usinage, une pluralité de découpes dans un assemblage (10), **caractérisé en ce que** l'assemblage est réalisé par au moins deux tubes (20) identiques aboutés, chaque tube (20) s'étendant selon un axe longitudinal entre deux extrémités, l'extrémité d'un tube (20), dite « première extrémité » (21), présentant une forme complémentaire de la forme de l'extrémité de l'autre tube (20), dite « seconde extrémité » (22), de sorte que lesdites première et seconde extrémités (21, 22) coopèrent par complémentarité de forme.

2. Procédé de fabrication selon la revendication 1, comportant, avant la réalisation des opérations d'usinage, une étape préliminaire de réalisation de l'assemblage (10) dans laquelle les tubes (20) sont obtenus par moulage puis aboutés les uns aux autres, de sorte à obtenir ledit assemblage (10).

3. Procédé de fabrication selon la revendication 1, comportant, avant la réalisation des opérations d'usinage, une étape préliminaire dans laquelle, pour chaque tube (20), un corps cylindrique (23) est réalisé par extrusion et une première extrémité (21) est réalisée par moulage, puis ladite première extrémité (21) est fixée audit corps cylindrique (23), et enfin les tubes (20) ainsi formés sont aboutés les uns aux autres de sorte à obtenir ledit assemblage (10).

4. Procédé de fabrication selon la revendication 3, dans lequel lors de l'étape préliminaire, la première extrémité (21) est surmoulée au corps cylindrique (23).

5. Procédé de fabrication selon l'une des revendications 2 ou 3, dans lequel lorsque les tubes (20) sont aboutés, ils sont vissés les uns avec les autres, au niveau de leurs première et seconde extrémités (21, 22) respectives en vis-à-vis.

6. Procédé de fabrication selon l'une des revendications 2 ou 3, dans lequel lorsque les tubes (20) sont aboutés, ils sont collés ou chassés les uns avec les autres, au niveau de leurs première et seconde extrémités (21, 22) respectives en vis-à-vis.

## Patentansprüche

1. Verfahren zur Herstellung von Dichtungen, **dadurch gekennzeichnet, dass** in einer Baugruppe (10) eine Vielzahl von Bearbeitungsaussparungen durch mechanische Bearbeitung erzeugt wird, wobei die Baugruppe aus mindestens zwei identischen, aneinandergefügten Rohren besteht, wobei jedes Rohr (20) sich entlang einer Längsachse zwischen zwei Enden erstreckt und das Ende eines Rohrs (20), als "erstes Ende" (21) bezeichnet, eine Form aufweist, die komplementär zur Form des Endes des anderen Rohrs (20), das als "zweites Ende" (22) bezeichnet wird, ausgebildet ist, sodass das erste und das zweite Ende (21, 22) formschlüssig miteinander zusammenwirken.

2. Verfahren zur Herstellung nach Anspruch 1, **dadurch gekennzeichnet, dass** vor der Durchführung der Bearbeitungsvorgänge eine vorbereitende Stufe vorgesehen ist, in der die Baugruppe (10) gebildet wird, wobei die Rohre (20) durch Gießen hergestellt und anschließend aneinandergefügt werden, um die genannte Baugruppe (10) zu erhalten.

3. Verfahren zur Herstellung nach Anspruch 1, **dadurch gekennzeichnet, dass** vor der Durchführung der Bearbeitungsvorgänge eine vorbereitende Stufe vorgesehen ist, in der für jedes Rohr (20) ein zylindrischer Körper (23) durch Extrusion hergestellt wird und ein erstes Ende (21) durch Gießen hergestellt wird, wobei das erste Ende (21) anschließend an dem zylindrischen Körper (23) befestigt wird, und die so gebildeten Rohre (20) anschließend aneinandergefügt werden, um die genannte Baugruppe (10) zu erhalten.

4. Verfahren zur Herstellung nach Anspruch 3, **dadurch gekennzeichnet, dass** in der vorbereitenden Stufe das erste Ende (21) mit dem zylindrischen Körper (23) überformt wird.

5. Verfahren zur Herstellung nach einem der Ansprüche 2 oder 3, **dadurch gekennzeichnet, dass** beim Aneinanderfügen der Rohre (20) diese im Bereich ihrer einander gegenüberliegenden ersten und zweiten Enden (21, 22) miteinander verschraubt werden.

6. Verfahren zur Herstellung nach einem der Ansprüche 2 oder 3, **dadurch gekennzeichnet, dass** beim Aneinanderfügen der Rohre (20) diese im Bereich ihrer einander gegenüberliegenden ersten und zweiten Enden (21, 22) miteinander verklebt oder verpresst werden.

## Claims

1. Method for manufacturing gasket seals consisting in producing, through machining operations, a plurality of cuts in an assembly (10) **characterised in that** the assembly is produced by at least two identical joined tubes (20), each tube (20) extending along a longitudinal axis between two ends, the end of one tube (20), referred to as "first end" (21), having a shape complementary to the shape of the end of the other tube (20), referred to as "second end" (22), so that said first and second ends (21, 22) cooperate by complementarity of shape.

2. Manufacturing method according to claim 1, including, before carrying out the machining operations, a preliminary step of producing the assembly (10) wherein the tubes (20) are obtained by moulding then joined together, so as to obtain said assembly (10).

3. Manufacturing method according to claim 1, including, before carrying out the machining operations, a preliminary step wherein, for each tube (20), a cylindrical body (23) is produced by extrusion and a first end (21) is produced by moulding, then said first end (21) is fixed to said cylindrical body (23), and finally the tubes (20) thus formed are joined together so as to obtain said assembly (10).

4. Manufacturing method according to claim 3, wherein during the preliminary step, the first end (21) is overmoulded on the cylindrical body (23).

5. Manufacturing method according to one of claims 2 or 3, wherein when the tubes (20) are joined, they are screwed together, at their first and second respective opposite ends (21, 22).

6. Manufacturing method according to one of claims 2 or 3, wherein when the tubes (20) are joined, they are glued or driven together, at their first and second respective opposite ends (21, 22).
